Europäisches Patentamt

European Patent Office

Office européen des brevets

(19)

(11) **EP 1 089 372 A1**

(12) **EUROPEAN PATENT APPLICATION**

(43) Date of publication:
**04.04.2001 Bulletin 2001/14**

(51) Int Cl.[7]: **H01M 10/46**, H01M 10/36,
H01L 31/058, H01M 10/44,
H01G 9/20, H01M 14/00

(21) Application number: **99119240.2**

(22) Date of filing: **28.09.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **Camus, Nelson E.
Monterey Park, CA 91754 (US)**

(72) Inventor: **Camus, Nelson E.
Monterey Park, CA 91754 (US)**

(74) Representative: **Kern, Ralf M., Dipl.-Ing.
Hansastrasse 16/II.
80686 München (DE)**

(54) **Independent and self-sustainable power generation and storage system**

(57)    A System for capturing, storing and delivering
energy, comprises a capture means (1; 9; 15) for capturing energy; storage means (22) for storing captured
energy; and charging means (20, 21; 23, 24, 25, 26) for
charging said captured energy into said storage means
(22), wherein said capture means (1; 9; 15) provides
electrical energy and said storage means is an electrolyte-based rechargeable battery (22) in which the electrolyte comprises adenosine triphosphate (ATP). A So-
lar panel (1; 9; 15) used in this system comprises reflec-
tors (2, 3; 7, 8) directing reflected photons onto the panel
(1; 9). The battery (22) of the system is charged with a
battery charger comprising a capacitor (23) and a control circuit (25) for controlling an intermediate charging
and discharging process of said capacitor, said method
comprising the steps of:

a) during a first period, charging said capacitor to a
predetermined level;
b) during a second period much shorter than said
first period, discharging said capacitor into said rechargeable battery in the form of at least one pulse;
c) repeating steps a) and b) until the rechargeable
battery is sufficiently charged.

FIG.1

**Description**

BACKGROUND OF THE INVENTION

The present invention relates to an independent and self-sustainable power generation and storage system according to the precharacterizing part of claim 1.

In addition, the present invention relates to a solar panel according to claim 28, to be used in the above power generation and storage system, and to a method according to claim 40 for charging energy into this system.

Such systems, composed of known solar panels, rechargeable batteries and control circuitry, are known and have been around for quite some time. However, even with large solar panels and large rechargeable batteries, these known systems, considering the modest amount of storable energy, require too much time for recharging, thus preventing their breakthrough for some applications or even barring them from many energy intensive applications such as powering vehicles or aircraft.

SUMMARY OF THE INVENTION

Accordingly, it is an object of the present invention to provide an independent and self-sustainable highly efficient power generation and storage system.

According to one aspect of the present invention, this object is achieved by a system for capturing, storing and delivering energy, comprising: capture means for capturing energy; storage means for storing captured energy; and charging means for charging said captured energy into said storage means; said capture means, charging means and storage means being appropriately associated to each other; and wherein said storage means may be connected to a load withdrawing energy from said storage means, characterized in that said capture means provides electrical energy and said storage means is an electrolyte-based rechargeable battery in which the electrolyte comprises adenosine triphosphate (ATP).

The addition of adenosine triphosphate (ATP) to the regular rechargeable battery greatly reduces its internal resistance. ATP is an important molecule in the energy metabolism of human cells. The ATP molecule stores energy which can be released in its transition to adenosine diphosphate (ADP). The ATP/ADP conversion is reversible and thus lends itself to applications involving redox processes in rechargeable batteries.

In a preferred embodiment, the electrolyte is based on sulphuric acid, preferably a self-cohesive electrolyte, more preferably a hard-gel electrolyte. This is a low cost, well established battery system. The highly viscous hard-gel electrolyte prevents battery problems if the battery is shaken or tilted.

In another preferred embodiment, the above electrolyte is based on uric acid rather than sulphuric acid. This type of battery can be easily prepared from urine.

Preferably, the electrolyte comprises only dry silica rather than the gel. In this way, the battery can be activated by simply adding water.

Advantageously, the electrolyte further comprises silver/tin alloy salts further improving the battery characteristics.

In a further preferred embodiment, the rechargeable battery is a multicell battery. With each rechargeable battery being composed of a suitable number of cells connected in series, several battery voltages may be achieved.

In another preferred embodiment, each battery cell comprises a porous sheet in the top portion of its housing above the electrolyte, said porous sheet preferably being a glass-type material such as a fiber glass tissue. This sheet prevents water from leaking out of the battery while being permeable to gases such as hydrogen, oxygen or nitrogen which have to be absorbed or released by the battery in some cases. The porous sheet may also be a carbon-based material such as graphite or fullerenes.

Advantageously, said charging means is a battery charger located in a nitrogen containing atmosphere together with said rechargeable battery, said battery charger comprising in its charging line a light emitting element emitting at least part of the frequency spectrum of a black body radiator. This light emitting element, which may be powered by the battery charger, emits photons interacting with the nitrogen in the surrounding atmosphere causing the nitrogen molecules to split into nitrogen atoms which, under the influence of α-particle (helium nuclei) bombardment from the sun and outer space, disintegrate to form hydrogen and oxygen atoms as summarized by the following equation:

$$N + He \rightarrow O + H \tag{1}$$

These two elements will then enter the inventive battery through the above described porous sheets while chemically combining to form water molecules. This process speeds up the battery charging and thus contributes very favorably to the charging process. The nitrogen acts as a "fuel".

More particularly, said light emitting element is an incandescent bulb emitting a continuous emission spectrum which is very effective in stimulating the above splitting of nitrogen.

Preferably, this type of bulb is located close to the porous sheet of each battery cell. In this way, most of the hydrogen and oxygen is formed close to the battery, thus improving the favorable contribution to the charging process.

In some cases, it is appropriate that during the charging process said rechargeable battery and said light emitting element are placed in a pressurized chamber containing gaseous nitrogen. With this higher density of nitrogen molecules/atoms available, the above transmutation of nitrogen yields more hydrogen and oxygen ultimately forming water and entering the battery to be charged.

In a further preferred embodiment, said battery charger comprises a capacitor and a control circuit for controlling an intermediate charging and discharging process of said capacitor, wherein, during the battery charging process, said capacitor is controlled such that it accumulates charge from a charging source during a first period, which charge is then discharged from said capacitor into the rechargeable battery in the form of at least one pulse during a second period much shorter than said first period, this process being repeated periodically until the rechargeable battery is sufficiently charged.

This pulsating charging process causes "clusters" of electrons to be pumped into the battery which again speeds up the charging process and contributes to a fully charged battery.

Preferably, said capacitor is a carbon-aluminum capacitor with aluminum electrodes and carbon material sandwiched therebetween in intimate contact with said electrodes. Again, under the influence of $\alpha$-particle bombardement, the aluminum atoms of the electrode material of this capacitor are prone to disintegrate into carbon and nitrogen atoms according to the following equation:

$$Al + He \rightarrow C + N \qquad\qquad (2)$$

where the aluminum serves as a "fuel" just as the nitrogen does in the previous equation.

Advantageously, said carbon material has a porous structure which communicates with the surrounding atmosphere. In this way, after the transmutation of one aluminum atom to one carbon atom and one nitrogen atom, the carbon atom remains in the porous carbon structure whereas the nitrogen atom may exit that porous structure while probably recombining to nitrogen molecules and eventually undergoing the transmutation according to equation (1). In this manner, the aluminum "fuel" both directly and indirectly contributes to the above battery charging.

In a further preferred embodiment, said battery charger comprises a spongy battery having a first electrode of a first material, a second electrode of a second material and spongy material moisted with ATP wherein the electrodes are sandwiched therebetween and in intimate contact with said spongy material. This spongy battery also contributes favorably to the charging process.

Preferably, said first material is a metal under the 14th position of the periodic table of the elements and the second material is a metal over the 14th position of the periodic table of the elements.

Also, said first material may be an alloy of metals with the main metal under the 14th position of the periodic table of the elements and the second material may be an alloy of metals with the main metal over the 14th position of the periodic table of the elements.

In a further preferred embodiment, said capture means comprises at least one solar panel provided with solar cells. This provides an independent energy source.

According to another aspect, the present invention provides a solar panel, preferably for being used in a system as defined in the previous paragraphs, characterized in that it comprises reflectors directing reflected photons onto the panel.

These reflectors enhance the effective light capturing area increasing the number of photons impinging on the solar cells and thus increasing the power output of the panel through an increase of the output current, the output voltage of the panel being fairly constant and depending primarily only on the materials of the pn-junction, the doping levels involved and the junction temperature.

Preferably, said reflectors are a pair of reflector wings hinged to opposite edges of the panel. In this way, the reflector wings may be turned to an optimum angle with respect to the solar panel in use and may also be folded down onto the panel if not in use, thus providing protection against mechanical damage of the panel and making it less bulky for transportation and handling.

Preferably, said reflectors consist of a transparent layer covering a reflecting layer thereunder, such as glass layer with its bottom surface covered with a silver-tin alloy coating.

In a preferred embodiment, said solar panel has a reduced thickness and its back surface covered with a reflecting material such as aluminum, having a low thermal resistance. Due to the reflecting material, photons which did not interact with the pn-junction during their first passage of the reduced thickness solar cell medium may still

**EP 1 089 372 A1**

interact during their second passage, increasing the overall illumination intensity to electrical power conversion efficiency of the solar panel.

In a further preferred embodiment, said back surface is equipped with an electrically powered cooling device in intimate contact with the aluminum layer. As mentioned above, the solar cell junction output voltage decreases with an increase in temperature. Also, and probably worse, the solar cell conversion efficiency drops off with increasing cell temperature. Due to the uniform cooling of the entire solar panel the output voltage on the one hand and the conversion efficiency on the other hand are maintained.

Advantageously, said cooling device is a thermocouple junction operated as a Peltier cooler. This type of "miniature refrigerator" is very compact in size, basically maintenance free and, last but not least, does not involve any environmentally harmful fluorohydrocarbons.

Preferably, said cooling device is powered by part of the electrical output of the solar panel.

The solar panel according to the present invention may be integrated in at least one wall of a refrigerator box with the solar cell on the outside surface of the wall and the cooling device on the inside surface of the wall.

According to yet another aspect, the present invention provides a method for charging energy into a rechargeable battery of a system described above, comprising: a capture means providing electrical energy; a battery charger having a capacitor and a control circuit for controlling an intermediate charging and discharging process of said capacitor; said method comprising the steps of:

a) during a first period, charging said capacitor to a predetermined level;
b) during a second period much shorter than said first period, discharging said capacitor into said rechargeable battery in the form of at least one pulse;
c) repeating steps a) and b) until the rechargeable battery is sufficiently charged.

This pulsating charging method speeds up the charging process of the battery.

Very good results in speeding up the battery charging are achieved when using a high wattage light bulb or even several such bulbs connected in series or in parallel in the charging line, preferably close to the rechargeable battery having a porous cover sheet. As explained above, atmospheric nitrogen under the influence of the intensive photon radiation from the bulb(s) as well as under the influence of cosmic $\alpha$-particle bombardment very favorably contributes to the accelerated battery charging.

Even better results are achieved if the capacitor of the battery charger is a carbon-aluminum capacitor. Again, under the influence of cosmic $\alpha$-particle bombardment the aluminum serves as a "fuel" providing additional energy for the battery charging.

In summary, the above system for capturing, storing and delivering energy, with the above solar panel being used as the capture means and using the above method for charging energy into the rechargeable battery of the system constitutes a truly hybrid system for capturing energy, since it captures "solar" energy in a broader sense:

1) photon energy from solar (classically speaking) radiation;
2) nuclear energy from nitrogen and aluminum nuclei activated by solar $\alpha$-particles.

| EXAMPLES OF SYSTEM COMPONENTS | | |
|---|---|---|
| ATP battery electrolyte: | | |
| Version 1) | - sulphuric acid (gravity 1.300): | 70.5 % |
| | - silver/tin alloy salts: | 2.5 % |
| | - adenosine triphosphate* (ATP): | 12.0 % |
| | - dry silica (optional): | 15.0 % |
| Version 2) | - concentrated urine | |
| | - bicarbonate | |
| | - sodium sulfate | |
| | - potassium hydroxide | |
| | - adenosine triphospate* (ATP) | |
| | - dry silica (optional) | |

* in dynamic equilibrium with adenosine diphosphate (ADP), with ATP/ADP ratio depending on degree of battery charging

The added ATP/ADP minimizes the electrical resistance of the electrolyte.

The hard-gel electrolyte due to the dry silica may be diluted, as required, with distilled water to get a liquid of the required viscosity that can be filled in each cell of the battery, each cell yielding approximately 2 volts.

The thin sheet of fiber glass tissue in the top portion of each battery cell, covering the total upper surface of the cell just in direct contact with the positive and negative plates minimizes the escape of hydrogen and oxygen gases with the reformation of water inside each cell during the charging and discharging cycles.

Battery charger:

The battery charger (Hyper Booster Controller) uses rectifier silicon diodes in the electronic circuitry, improving the battery charging efficiency during a time delay of 6 seconds followed by the electron cluster discharge into the ATP battery and also maintains the internal (supportive, auxiliary) batteries totally activated all the time. The discharge of electron clusters to the storage battery every 6 seconds with the help of samll (supportive) batteries pushes down the current from the solar panels.

Each rectifier silicon diode produces a voltage drop of 0.45 volts, maintaining the current in the electronic circuitry constant. Preferably, several rectifier silicon diodes are connected in series to maintain the RMS average power in the electron flow in order to charge respective batteries.

The internal carbon-aluminum capacitor is connected in parallel with the terminals of the internal small (auxiliary) batteries and/or the external small batteries used in the control circuitry. In addition, they are connected to the positive output of the solar panel together with the anode terminal of the series of rectifier silicon diodes whose final cathode terminal of the series is directly connected to the positive terminal output of the control circuitry. All the negative terminals of each component are connected together.

The electronic circuitry is to detect the storage status of the battery to be charged, adjusting by itself the time delay and lapse of time in the discharge of the electron flow clusters (pulses) .

The spongy battery composed of the flat sandwich of the two different alloys of metals separated with a thin spongy paper moisted with ATP can be activated by any existing source of electric power.

The battery charger using the light charging principle has one rectifier diode of 600 V.p.e.p./ 3 amps connected in series with one or more incandescent light bulbs having a power consumption of more than 10 watts and a nominal voltage of 10 to 400 volts at 50 to 60 Hz AC, also in series with the battery to be formed or charged, closing the circuit with the 110-220 V.A.C. supply from the utility grid. This set-up of the light battery charger more than doubles the efficiency of the battery during the discharging cycle. Particularly, it reduces the heat dissipation and bubble formation in the surface of the liquid lead acid battery during the formation process in the factory, reducing production costs and minimizing health hazards to factory workers.

Further advantages of the present invention are:

- reducing the manufacture and shipment costs of the power generation and storage system
- maximizing existing solar electric conversion efficiencies
- reducing the risks involved in transporting hazardous materials such as liquid lead-acid batteries
- reducing battery manufacture costs
- preventing the deterioration of food
- providing dependable computer back-up
- providing efficient source for daily and/or emergency power lights, television and radio receivers and transmitters,
- compensating for extended interruptions of utility power

The present invention as set forth above and in the appended claims as well as additional features, advantages and applications thereof will be best understood from the following description of preferred embodiments when read in connection with the accompanying drawings.

BRIEF DESCRIPTION OF THE DRAWINGS

Fig. 1 is a perspective view of a reflector wing type solar panel according to the present invention;

Fig. 1-A is a perspective view of another wing-equipped solar panel;

Fig. 2 is a perspective view of a solar panel with a thermo-couple Peltier cooler mounted thereon;

Fig. 3 shows a lateral cross section of a further solar panel with a thermo-couple Peltier cooler;

Fig. 4 is a front perspective view of a solar refrigerator comprising four thermo-couple Peltier coolers and one blower;

Fig. 5 is a front perspective view of one single cell of an ATP (adenosine triphosphate) battery according to the present invention, with its housing partly broken away, showing a thin sheet of fiber glass tissue covering the upper surface of the cell directly contacting the negative and positive plates;

Fig. 6 is a simplified schematic wiring diagram of a battery charger including a continuous spectrum light emitting element according to the present invention;

Fig. 7 is a simplified schematic wiring diagram of another battery charger including an external energy source (e. g. small battery), a capacitor for intermediate charging as well as charging control circuitry;

Fig. 8 is an exploded view of a spongy battery with three spongy papers moisted with adenosine triphosphate (ATP) alternating with two metal sheets (positive and negative), each of which consisting of a different metal or metal alloy; and

Fig. 9 is a lateral cross sectional view of the spongy battery of Fig. 8.

DETAILED DESCRIPTION OF THE PREFERRED EMBODIMENTS

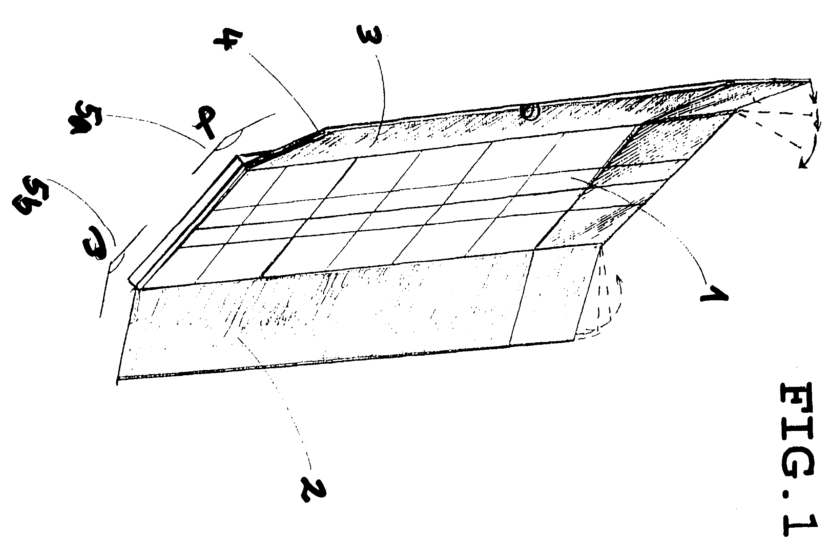

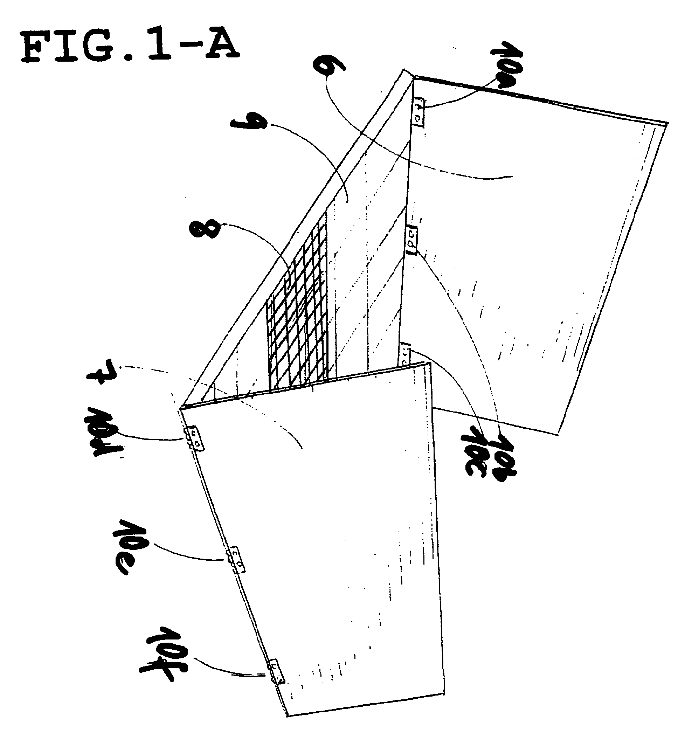

Referring to Fig. 1, a solar panel 1 having a right reflector wing 2, a left reflector wing 3 and a frame 4 is shown. The right reflector wing 2 forms a right aperture angle 5b and the left reflector wing 3 forms a left aperture angle 5a with respect to the plane defined by the solar panel 1. Both reflector wings 2, 3 concentrate more solar power / intensity (number of photons per unit area) onto the solar panel 1, thus enhancing its electrical power output.

Referring to Fig. 1-A, another solar panel 9 having a right reflector wing 6 and a left reflector wing 7 is shown. In addition, this solar panel 9 has a flat aluminum sheet 8 having a thickness of 3.2 mm (1/8"). The reflector wings 6, 7 are hinged to the solar panel 9 by metal hinges 10a, 10b, 10c and 10d, 10e, 10f, respectively. Aluminum being a good thermal conductor, the aluminum sheet 8 contributes to a uniform temperature distribution over the solar panel 9, preventing internal voltage differences which might cause damage to the solar panel due to internal currents.

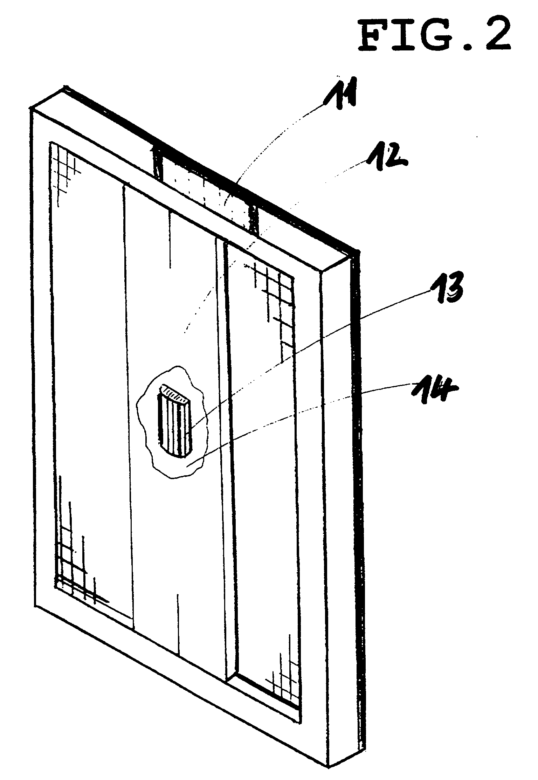

Referring to Fig. 2, yet another solar panel equipped with an aluminum sheet having a first side 11 and a second side 12 is shown. A thermo-couple junction 13 is attached to the second side 12 of the aluminum sheet 11, 12 by an adhesive contact 14. The thermo-couple junction 13 is operated as a Peltier cooler with its cold side attached to the aluminum sheet. Thus, due to its good thermal conductivity, the aluminum sheet 11, 12 acts as a heat sink cooling the solar panel. Again, the thickness of the aluminum sheet is 3.2 mm (1/8").

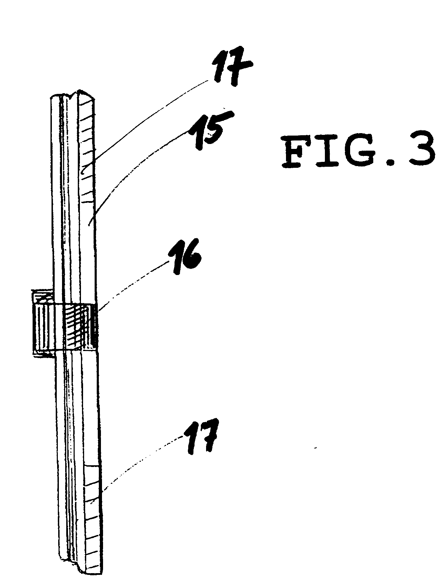

Referring to Fig. 3, a cross section of a further solar panel 15 is shown. A thick piece of aluminum 16 extends across the panel, providing thermal contact between the Peltier cooler and the solar panel 15. The aluminum sheet 17 is arranged on both sides of the solar panel 15.

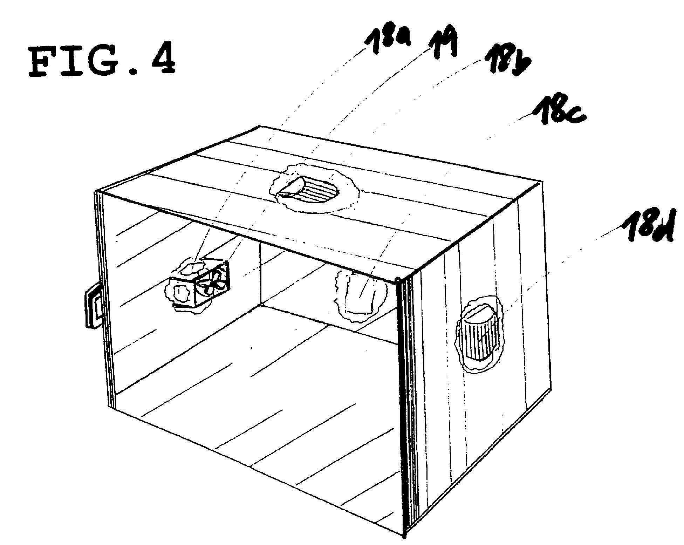

Referring to Fig. 4, a solar refrigerator having four walls each with a Peltier cooler 18a, 18b, 18c and 18d is shown. In addition, one of the four walls has a blower 19 mounted thereon. At least one of the four walls is provided with a solar panel to power the four Peltier coolers and the blower.

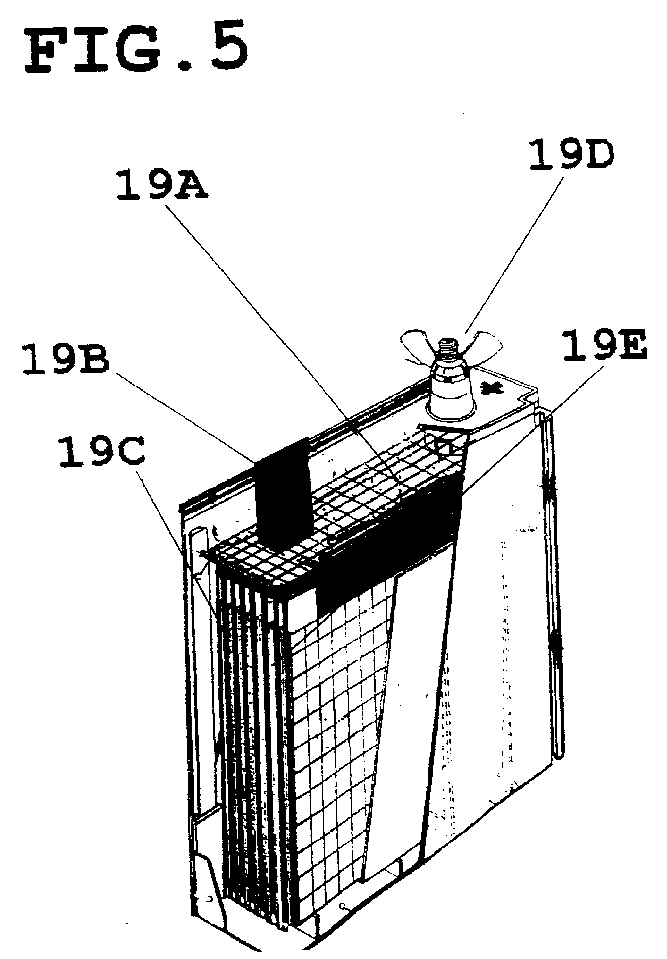

Referring to Fig. 5, a front perspective view of one single cell of an ATP (adenosine triphosphate) battery according to the present invention is shown, with its housing partly broken away, showing a thin sheet of fiber glass tissue 19A covering the upper surface of the cell, directly contacting the positive plate 19C and the negative plate 19E of the cell. The negative electrode terminal 19B extends through the fiber glass tissue cover 19A and the positive electrode terminal 19D is connected to the housing of the single cell ATP battery.

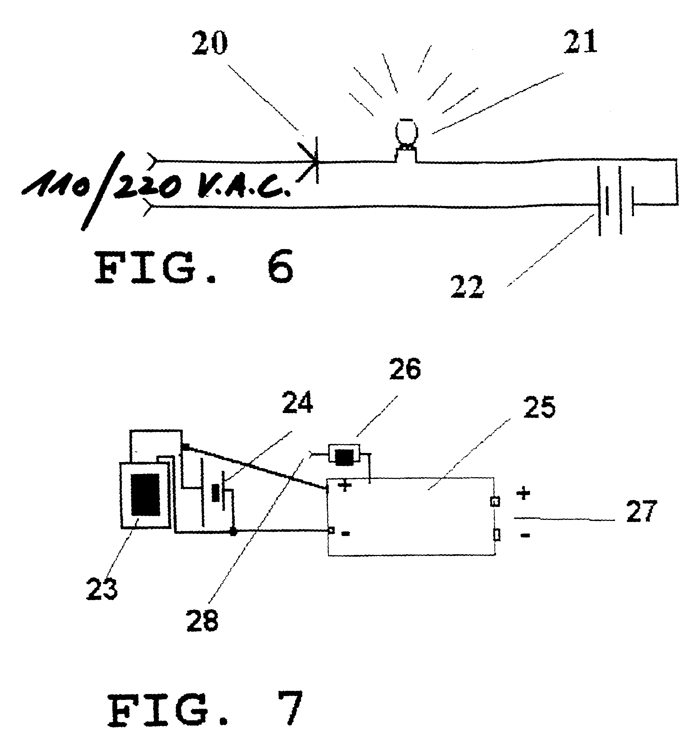

Referring to Fig. 6, a simplified schematic wiring diagram of a battery charger including a rectifier diode 20 for half wave rectification and a high wattage light bulb 21 emitting a continuous spectrum of light is shown. The battery to be charged 22 is an ATP battery as shown in Fig. 5. The inventive ATP battery which may have an electrolyte based on sulphuric acid, uric acid or a similar acid, can be more rapidly charged with the inventive light battery charger if the light bulb 21 is on. Of course, the inventive battery charger could have a more sophisticated rectifier unit permitting full wave rectification, smoothing, etc.

Referring to Fig. 7, a simplified schematic wiring diagram of another battery charger (Hyper Booster Controller) including a carbon-aluminum capacitor 23 for intermediate charging, a small battery 24 as an internal and/or external supportive energy source as well as charging control circuitry 25 is shown. In addition, a rectifier silicon diode 26 is provided in the power input line to the charging control circuit 25. A solar panel (not shown) as a major energy source is connected with its output to the positive input terminal 28. The ATP battery to be charged (not shown) is to be connected to the positive and negative output terminals 27 of the charging control circuit 25. The control circuit 25 causes periodic charging of the ATP battery. Each period is composed of a first period and a second period. During the first period, the carbon-aluminum capacitor 23 is charged from the solar panel through the control circuit 25. During the subsequent second period, the carbon-aluminum capacitor 23 is discharged in one or more pulses into the ATP battery again through the control circuit 25. All negative terminals of each component are connected together.

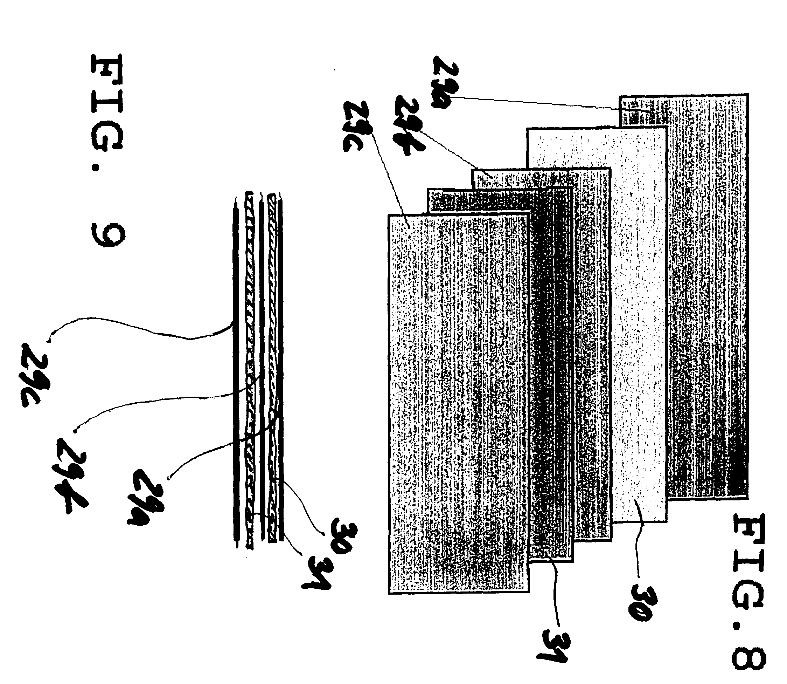

Referring to Fig. 8, an exploded view of a flat sandwich-type spongy battery (Electron Organizer) with three spongy papers 29a, 29b, 29c moisted with adenosine triphosphate (ATP) alternating with two metal sheets 30, 31 (negative and positive), each of which consisting of a different metal or metal alloy, is shown. The metal sheet 30 is formed of a metal under the 14th position in the periodic table and acts as a negative pole whereas the metal sheet 31 is formed of a metal over the 14th position in the periodic table and acts as a positive pole.

Referring to Fig. 9, a lateral cross sectional view of the spongy battery of Fig. 8 is shown with the negative plate 30, the positive plate 31 and the ATP moisted spongy papers 29a, 29b, 29c surrounding the plates 30, 31.

**Claims**

1.   System for capturing, storing and delivering energy, comprising:

capture means (1; 9; 15) for capturing energy;
storage means (22) for storing captured energy; and
charging means (20, 21; 23, 24, 25, 26) for charging said captured energy into said storage means (22) ;
said capture means, charging means and storage means being appropriately associated to each other; and

wherein said storage means may be connected to a load withdrawing energy from said storage means, characterized in that
said capture means (1; 9; 15) provides electrical energy and said storage means is an electrolyte-based rechargeable battery (22) in which the electrolyte comprises adenosine triphosphate (ATP).

2.   The system according to claim 1, characterized in that said electrolyte is based on sulphuric acid.

3.   The system according to claim 1, characterized in that said electrolyte is based on uric acid.

4.   The system according to any one of claims 1 to 3, characterized in that said electrolyte is a gel electrolyte.

5.   The system according to claim 4, characterized in that said gel is a self cohesive gel.

6.   The system according to any one of claims 1 to 3, characterized in that said electrolyte further comprises dry silica.

7.   The system according to any one of claims 1 to 6, characterized in that said electrolyte further comprises silver/tin alloy salts.

8.   The system according to any one of claims 1 to 7, characterized in that the rechargeable battery (22) is a multicell battery.

9.   The system according to claim 8, characterized in that each battery cell comprises a porous cover sheet (19A) in the top portion of its housing above the electrolyte.

10.  The system according to claim 9, characterized in that said porous cover sheet (19A) is of glass-type material.

11.  The system according to claim 10, characterized in that said glass-type material is a fiber glass tissue.

12.  The system according to claim 11, characterized in that said porous cover sheet (19A) is of carbon based material.

13.  The system according to claim 12, characterized in that said carbon based material is graphite.

14.  The system according to claim 13, characterized in that said carbon based material comprises fullerenes.

15. The system according to any one of claims 1 to 14, characterized in that said charging means is a battery charger (20, 21) located in a nitrogen containing atmosphere together with said rechargeable battery (22), said battery charger comprising in its charging line a light emitting element (21) emitting at least part of the frequency spectrum of a black body radiator.

16. The system according to claim 15, characterized in that said light emitting element (21) is powered by the battery charger.

17. The system according to claim 15 or 16, characterized in that said light emitting element is an incandescent bulb (21).

18. The system according to any one of claims 15 to 17, characterized in that said light emitting element (21) is located close to the porous sheet (19A) of each battery cell.

19. The system according to any one of claims 15 to 18, characterized in that during the charging process said rechargeable battery (22) and said light emitting element (21) are placed in a pressurized chamber containing gaseous nitrogen.

20. The system according to any one of claims 15 to 19, characterized in that said battery charger (23, 24, 25, 26) comprises a capacitor (23) and a control circuit (25) for controlling an intermediate charging and discharging process of said capacitor (23), wherein, during the battery charging process, said capacitor (23) is controlled such that it accumulates charge from a charging source during a first period, which charge is then discharged from said capacitor into the rechargeable battery in the form of at least one pulse during a second period much shorter than said first period, this process being repeated periodically until the rechargeable battery is sufficiently charged.

21. The system according to claim 20, characterized in that said capacitor is a carbon-aluminum capacitor (23) with aluminum electrodes and carbon material sandwiched therebetween and in intimate contact with said electrodes.

22. The system according to claim 21, characterized in that said carbon material has a porous structure which communicates with the surrounding atmosphere.

23. The system according to claim 21, characterized in that said carbon material is a mesh, a non-woven web or sheet of carbon fibers.

24. The system according to claim 23, characterized in that said carbon based material is graphite.

25. The system according to claim 21, characterized in that said carbon based material comprises fullerenes.

26. The system according to any one of claims 15 to 25, characterized in that said battery charger (23, 24, 25, 26) comprises a spongy battery (29a, 30, 29b, 31, 29c) having a first electrode (30) of a first material, a second electrode (31) of a second material and layers of spongy material (29a, 29b, 29c) moisted with ATP with the metal layers sandwiched therebetween and in intimate contact with said spongy material.

27. The system according to claim 26, characterized in that said first material is a metal under the 14th position of the periodic table of the elements and the second material is a metal over the 14th position of the periodic table of the elements.

28. The system according to claim 26, characterized in that said first material is an alloy of metals with the main metal under the 14th position of the periodic table of the elements and the second material is an alloy of metals with the main metal over the 14th position of the periodic table of the elements.

29. The system according to any one of the preceding claims, characterized in that said capture means comprises at least one solar panel (1; 9; 15) provided with solar cells.

30. Solar panel, preferably for being used in a system as defined in any one of claims 1 to 29, characterized in that it comprises reflectors (2, 3; 7, 8) directing reflected photons onto the panel (1; 9).

31. The solar panel according to claim 30, characterized in that said reflectors (2, 3; 7, 8) are a pair of reflector wings hinged to opposite edges of the panel (1; 9).

32. The solar panel according to claim 30 or 31, characterized in that said reflectors consist of a transparent layer covering a reflecting layer thereunder.

33. The solar panel according to claim 32, characterized in that said transparent layer is glass and said reflecting layer is silver-tin alloy.

34. The solar panel according to any one of claims 30 to 33, characterized in that said solar panel has a reduced thickness and its back surface covered with a reflecting material having a low thermal resistance.

35. The solar panel according to claim 34, characterized in that said reflecting material is aluminum.

36. The solar panel according to claim 35, characterized in that said back surface is equipped with an electrically powered cooling device (13) in intimate contact with the aluminum layer (11, 12).

37. The solar panel according to claim 36, characterized in that said cooling device is a thermocouple junction operated as a Peltier cooler (13).

38. The solar panel according to claim 36 or 37, characterized in that said cooling device (13) is powered by part of the electrical output of the solar panel.

39. The solar panel according to any one of claims 30 to 38, characterized in that it is integrated in at least one wall of a refrigerator box with the solar cell on the outside surface of the wall and the cooling device (18a, 18b, 18c, 18d) on the inside surface of the wall.

40. A method for charging energy into a rechargeable battery (22) of a system according to any one of claims 20 to 29, comprising:
a capture means (1; 9; 15) providing electrical energy; a battery charger having a capacitor (23) and a control circuit (25) for controlling an intermediate charging and discharging process of said capacitor; said method comprising the steps of:

   a) during a first period, charging said capacitor to a predetermined level;
   b) during a second period much shorter than said first period, discharging said capacitor into said rechargeable battery in the form of at least one pulse;
   c) repeating steps a) and b) until the rechargeable battery is sufficiently charged.

FIG.1

FIG.1-A

FIG.2

FIG.3

FIG.4

# FIG.5

**FIG. 6**

110/220 V.A.C.

**FIG. 7**

FIG.8

30

31

29a

29b

29c

30 31

29a

29b

29c

FIG. 9

EP 1 089 372 A1

European Patent Office

EUROPEAN SEARCH REPORT

Application Number

EP 99 11 9240

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DE 196 28 926 A (NIELSEN DENNIS W DIPL ING ;WINTERBERG FRANZ W DR H C (DE); HUNDRUP) 30 April 1998 (1998-04-30) * the whole document * --- | 1,8 | H01M10/46 H01M10/36 H01L31/058 H01M10/44 H01G9/20 H01M14/00 |
| Y | US 5 644 207 A (LE BINH Q ET AL) 1 July 1997 (1997-07-01) * column 3, line 37 - column 4, line 54 * * column 5, line 51 - column 10, line 34 * --- | 1,8 | |
| A | CHEMICAL ABSTRACTS, vol. 122, no. 8, 20 February 1995 (1995-02-20) Columbus, Ohio, US; abstract no. 85418, IGAWA, MICHIKO ET AL: "Sealed secondary batteries with improved hydrogen absorbing anodes" XP002134272 * abstract * & JP 06 283161 A (HITACHI CHEMICAL CO LTD, JAPAN) 7 October 1994 (1994-10-07) --- | 1 | |
| A | DE 196 48 691 A (RADEBOLD REINHART ;RADEBOLD WALTER DIPL GEOL (DE); RADEBOLD HELMUT) 17 July 1997 (1997-07-17) * page 5, line 15 - page 7, line 42; claims 1-7 * * page 8, line 5-23 * * page 10, line 10-17; claims 1-7 * --- | 1,2 | TECHNICAL FIELDS SEARCHED (Int.Cl.7) H01M H01L H01G |
| A | DE 42 29 851 A (EHBAUER HUBERT G) 17 March 1994 (1994-03-17) * the whole document * --- -/-- | 1 | |

The present search report has been drawn up for all claims

| Place of search | Date of completion of the search | Examiner |
|---|---|---|
| THE HAGUE | 29 March 2000 | DE VOS, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**European Patent**

**Office**

Application Number

EP 99 11 9240

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-19,29

**European Patent Office**

**EUROPEAN SEARCH REPORT**

Application Number

EP 99 11 9240

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 010, no. 268 (E-436), 12 September 1986 (1986-09-12) & JP 61 091883 A (MATSUSHITA ELECTRIC IND CO LTD), 9 May 1986 (1986-05-09) * abstract * | 1 | |
| A | PATENT ABSTRACTS OF JAPAN vol. 018, no. 674 (P-1846), 19 December 1994 (1994-12-19) & JP 06 266111 A (TOSHIBA CORP), 22 September 1994 (1994-09-22) * abstract * | 1 | |
| A | FR 2 418 532 A (SNIA VISCOSA) 21 September 1979 (1979-09-21) * claims 1-26 * | 1-5 | |
| A | US 4 117 202 A (BECK TIMOTHY A) 26 September 1978 (1978-09-26) * the whole document * | 1 | TECHNICAL FIELDS SEARCHED (Int.Cl.7) |

~~The present search report has been drawn up for all claims~~

| Place of search | Date of completion of the search | Examiner |
|---|---|---|
| THE HAGUE | 29 March 2000 | DE VOS, A |

EPO FORM 1503 03.82 (P04C01)

| European Patent Office | LACK OF UNITY OF INVENTION SHEET B | Application Number EP 99 11 9240 |
|---|---|---|

The Search Division considers that the present European patent application does not comply with the requirements of unity of invention and relates to several inventions or groups of inventions, namely:

1. Claims: 1-19,29

   System comprising energy capturing means,energy storing means and means for charging said captured energy into said storage means characterized in that said storage means comprises adenosine triphosphate in electrolyte of rechargeable battery(claims 1-14 give more details of this battery) and in that said charging means is a battery charger comprising a light emitting element and located in a nitrogen containing atmosphere together with said battery(claims 15-19)

2. Claims: 20-25,40

   Alternative for battery charger:comprising capacitor and control circuit for charging battery with pulses

3. Claims: 26-28

   Second alternative for battery charger comprising a spongy battery with layers moistened with ATP between electrode plates.

4. Claims: 30-39

   Characteristics of a solar panel "preferably" for being used in a system  as in claims 1-29.

**ANNEX TO THE EUROPEAN SEARCH REPORT
ON EUROPEAN PATENT APPLICATION NO.**

EP 99 11 9240

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2000

| Patent document cited in search report | | Publication date | Patent family member(s) | | Publication date |
|---|---|---|---|---|---|
| DE 19628926 | A | 30-04-1998 | NONE | | |
| US 5644207 | A | 01-07-1997 | CA | 2260789 A | 23-10-1997 |
| | | | EP | 0948829 A | 13-10-1999 |
| | | | SG | 49360 A | 18-05-1998 |
| | | | WO | 9739491 A | 23-10-1997 |
| JP 6283161 | A | 07-10-1994 | NONE | | |
| DE 19648691 | A | 17-07-1997 | WO | 9717828 A | 22-05-1997 |
| | | | EP | 0867049 A | 30-09-1998 |
| DE 4229851 | A | 17-03-1994 | DE | 4230657 A | 19-05-1994 |
| JP 61091883 | A | 09-05-1986 | NONE | | |
| JP 06266111 | A | 22-09-1994 | DE | 4408318 A | 15-09-1994 |
| | | | KR | 148624 B | 02-11-1998 |
| FR 2418532 | A | 21-09-1979 | AU | 4463379 A | 06-09-1979 |
| | | | BR | 7901227 A | 02-10-1979 |
| | | | DE | 2907684 A | 06-09-1979 |
| | | | GB | 2018513 A,B | 17-10-1979 |
| | | | JP | 54125995 A | 29-09-1979 |
| | | | US | 4212932 A | 15-07-1980 |
| US 4117202 | A | 26-09-1978 | NONE | | |

For more details about this annex : see Official Journal of the European Patent Office, No. 12/82